# EUROPÄISCHE PATENTSCHRIFT

(11) **EP 0 698 524 B1**
(45) Veröffentlichungstag und Bekanntmachung des Hinweises auf die Patenterteilung: **23.09.1998**
(21) Anmeldenummer: 95110846.3
(22) Anmeldetag: 11.07.1995
(51) Int. Cl.: B60N 2/46

(54) **Einstellbare Armstütze für Kraftfahrzeuge**
Adjustable arm rest for motor vehicles
Accoudoir réglable pour véhicules automobiles

(30) Priorität: 25.07.1994 US 280262
(43) Veröffentlichungstag der Anmeldung: 28.02.1996
(73) Patentinhaber: Deere & Company, Moline, Illinois 61265-8098 (US)
(72) Erfinder: Muzzy, Norman Everett, Cedar Falls, Iowa 50613 (US); Klages, Corwin Lee, Cedar Falls, Iowa 50613 (US); Hansotia, Eric Phiroze, Independence, Iowa 50644 (US)
(74) Vertreter: Feldmann, Bernhard

(56) Entgegenhaltungen:
- EP-A- 0 346 251
- DE-A- 2 935 946
- DE-A- 3 825 124
- US-A- 4 478 308
- US-A- 4 619 478
- US-A- 4 659 135

## Beschreibung

Die Erfindung betrifft eine einstellbare Armstütze für die Verwendung mit dem Fahrersitz eines Fahrzeugs, insbesondere eines landwirtschaftlichen Fahrzeugs (siehe z.B. DE-A-2 935 946, dem Oberbegriff entsprechend).

Traditionell sind die Bedienungselemente für Traktoren und andere große Arbeitsmaschinen als nach oben stehende Elemente unmittelbar am Boden des Fahrzeugbedienungsstandes auf beiden Seiten des Fahrersitzes befestigt. Es hat sich jedoch als bequem herausgestellt, die Bedienungselemente, beispielsweise Schalthebel und Bedienungsknöpfe auf einer Armstütze neben dem Fahrersitz anzuordnen. Der Fahrersitz läßt sich gewöhnlich durch die Bedienungsperson auf optimale Bequemlichkeit und Sichtverhältnisse einstellen. Viele Fahrersitze sind mit stoßabsorbierenden Federungen ausgestattet, durch die auf die Bedienungsperson einwirkende Stöße abgefangen werden, indem sich der die Bedienungsperson tragende Bereich des Sitzes in Abhängigkeit der auf das Fahrzeug einwirkenden Stöße bewegt. Eine Einstellung des Sitzes kann jedoch dazu führen, daß sich die Betätigungselemente nicht mehr an ihrer für die Bedienungsperson optimalen Stelle befinden, was entweder durch eine Veränderung der Sitzeinstellung ausgeglichen wird oder Unbequemlichkeiten bei der Bedienung des Fahrzeugs zur Folge hat. Wenn sich der die Bedienungsperson tragende Bereich des Sitzes bewegt, um Stöße abzufangen, verändert sich auch die Lage der Bedienungselemente relativ zum Fahrersitz, was ebenfalls zu Unbequemlichkeiten führen kann.

Um diese Probleme zu überwinden, wurde durch die US-A-4 478 308 eine einstellbare Armstütze vorgeschlagen. Jedoch ist diese Armstütze nur in vertikaler Richtung relativ zum Fahrersitz einstellbar.

Bei anderen einstellbaren Armstützenmechanismen wurden komplizierte und sperrige Viergelenkgestänge verwendet. Viergelenkgestänge erlauben jedoch nur die Einstellung einer einzigen vertikalen Lage für jede Längsposition. Es ist jedoch eine Armstütze wünschenswert, die sich in mehr als lediglich eine vertikale Lage für jede Längsposition einstellen läßt, um so eine Anpassung auf die jeweilige Korrelation bezüglich des Abstands zwischen dem Ellbogen und der Hüfte einerseits und der Unterarmlänge der Bedienungsperson andererseits zu ermöglichen.

Die der Erfindung zugrunde liegende Aufgabe wird darin gesehen, eine einstellbare Armstütze bereitzustellen, durch die sich mehr als eine einzige vertikale Lage für jede Längsposition einstellen läßt, um eine Anpassung der Korrelation bezüglich des Abstands zwischen dem Ellbogen und der Hüfte einerseits und der Unterarmlänge der Bedienungsperson andererseits zu ermöglichen. Der hierbei erforderliche Mechanismus soll einfach und kompakt ausgebildet sein.

Die Aufgabe wird erfindungsgemäß durch die kennzeichnenden Merkmale des Patentanspruchs 1 gelöst. Weitere vorteilhafte Ausgestaltungen und Weiterbildungen der Erfindung gehen aus den Unteransprüchen hervor.

Erfindungsgemäß enthält eine einstellbare Armstütze zur Verwendung mit einem Fahrersitz auf einem Fahrzeug zwei Tragzapfen, die seitlich von einer Seite des Fahrersitzes abstehen. Die offene Seite eines im wesentlichen rechteckigen Rahmens ist dem Fahrersitz zugewandt. Zwei angetriebene Elemente, z. B. Zahnräder sind drehbar um ihre zentrale Achse am Rahmen befestigt. Jedes Zahnrad weist eine außerhalb der Achse liegende und zu dieser parallel ausgerichtete Bohrung auf, die einen der Tragzapfen aufnimmt. Durch ein Antriebsrad wird ein Riemen angetrieben, welcher die Zahnräder dreht, so daß sich das Antriebsrad und der Rahmen relativ zu den Tragzapfen bewegen. Auf einer Seite einer Hülse, deren andere Seite mit dem Antriebsrad verbunden ist, ist ein Betätigungsknopf drehfest und längsverschiebbar angeordnet. Der Betätigungsknopf ist drehbar, jedoch nicht axial verschiebbar an einem Ende einer verschiebbar innerhalb der Hülse angeordneten Welle befestigt. An dem anderen Ende der Welle ist eine Sperr- oder Feststellklinke befestigt. Eine Feder drückt den Betätigungsknopf und die Sperrklinke in eine Sperrposition, in der die Sperrklinke in Verzahnungen der Zahnräder eingreift und diese an einem Verdrehen hindert. Der Betätigungsknopf läßt sich gegen die Kraft der Feder verschieben, um die Sperrklinke aus der Verriegelungsstellung herauszubewegen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines erfindungsgemäßen Einstellmechanismus für eine Armlehne,
- Fig. 2: die Schnittansicht entlang der Linie 2 - 2 in Fig. 1,
- Fig. 3: die Schnittansicht entlang der Linie 3 - 3 in Fig. 1,

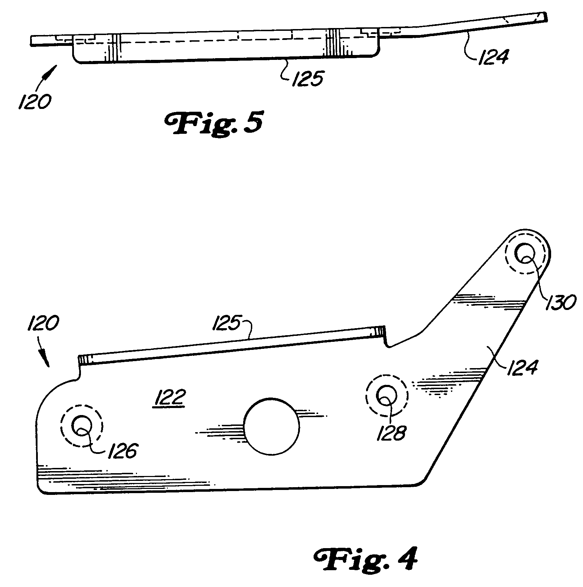

- Fig. 4: eine Seitenansicht des Stützteils der vorliegenden Erfindung und
- Fig. 5: die Aufsicht des Stützteils aus Fig. 4.

Die erfindungsgemäße Einstelleinrichtung 10 für eine Armstütze enthält einen Rahmen 16, welcher eine im wesentlichen kastenförmige Form mit einer Seitenwandung 18, einer Oberwandung 20 und einer Unterwandung 22 aufweist. Der Rahmen 16 ist zu der Seite hin offen, die dem nicht näher dargestellten Fahrersitz zugewandt ist. In der Seitenwandung 18 sind Lageraufnahmen oder Naben 24 (in der Zeichnung nicht gezeigt), 26, 28 angeformt. Die Naben 24 und 28 sind auf beiden Seiten einer zentralen Nabe 26 angeordnet. Jeweils ein Halter oder Bolzen 30 ist in Gewindebohrungen der Naben 24 und 28 eingeschraubt. Zwei angetriebene zylindrische Zahnräder 34, 35 sind mittels Lagerungen 36 drehbar auf den Bolzen 30 angeordnet. Jedes Zahnrad 34, 35 weist eine zentrale Bohrung 38 auf, die den zugehörigen Bolzen 30 aufnimmt. Jedes Zahnrad 34, 35 enthält einen Zahnkranz dessen Zähne sich radial nach außen erstrecken. Jedes der Zahnräder 34, 35 enthält ferner eine Bohrung 40, die parallel zur entsprechenden zentralen Bohrung 38 ausgerichtet und gegenüber dieser versetzt oder zu dieser beabstandet ist. Jede Bohrung 40 nimmt eine hohle zylindrische Lagerung 42 auf.

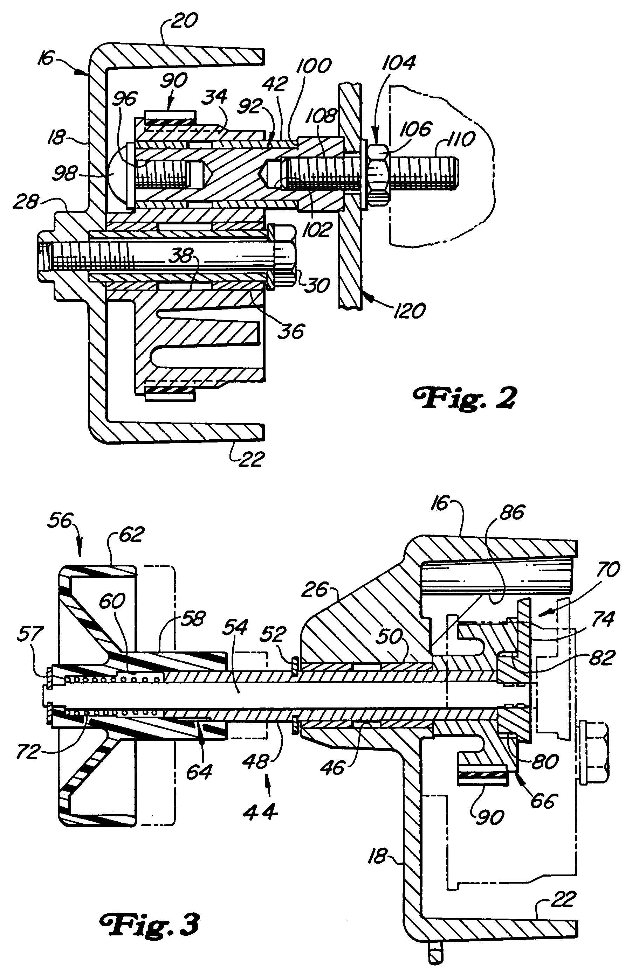

Ein durch eine Bedienungsperson betätigbares Stellglied oder Betätigungsorgan 44 ist in einer Bohrung 46 der zentralen Nabe 26 gelagert. Das Betätigungsorgan 44 enthält eine hohle zylindrische Hülse 48, die über eine Lagerung 50 drehbar von der Bohrung 46 aufgenommen wird. Ein Sicherungsring oder Sprengring 52 ist in einer Nut der Hülse 48 angeordnet, um die Hülse 48 gegen eine axiale Bewegung nach rechts (in bezug auf die Fig. 3) zu schützen. Die Hülse 48 nimmt eine in der Hülse 48 verschiebbare Welle 54 auf, die über beide Enden der Hülse 48 vorsteht. Ein Betätigungsknopf 56 enthält eine Nabe 58 mit einer sich dadurch erstreckenden Bohrung 60 und mit einem Handrad 62. Die Nabe 58 des Betätigungsknopfes 56 ist durch eine Zahnverbindung 64 axial gleitbar und drehfest mit einem ersten Ende der Hülse 48 verbunden. Das erste Ende der Hülse 48 wird durch die Nabe 58 aufgenommen. Das andere Ende der Hülse 48 ist mit einem zylindrischen Antriebsrad 66 fest verbunden.

Der Betätigungsknopf 56 ist drehbar und nichtverschiebbar mit einem Ende der Welle 54 verbunden und wird auf dieser durch einen Sicherungsring 57 festgehalten. Das andere Ende der Welle 54 ist an einer Sperr- oder Schaltklinke 70 befestigt. Zwischen der Nabe 58 und der Stirnseite des ersten Endes der Hülse 48 ist auf der Welle 54 eine Feder 72 angeordnet, die den Betätigungsknopf 56 hinsichtlich der Fig. 3 nach links drückt.

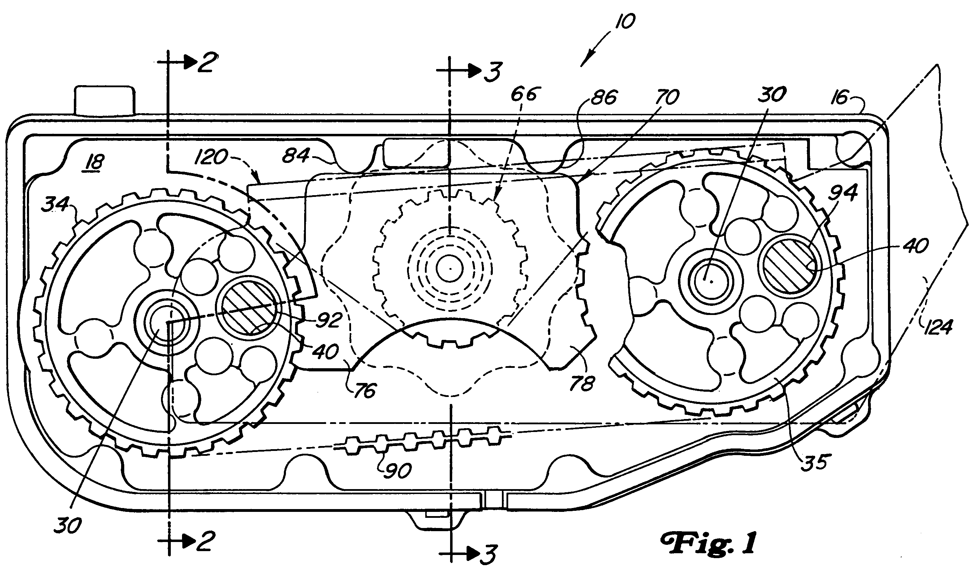

Wie am besten aus Fig. 1 ersichtlich, enthält die Sperrklinke 70 eine Platte 74 mit zwei konkav gekrümmten Endbereichen 76, 78, welche Zähne tragen, die für den Eingriff mit den Zahnrädern 34, 35 bestimmt sind. Wie weiter aus den Figuren 1 und 3 hervorgeht, hat die Sperrklinke 70 eine Nabe 80, die durch eine Ausnehmung 82 in einer Stirnseite des Antriebsrades 66 aufgenommen wird. Zwei Versteifungsrippen 84, 86 sind an die Innenseite der Oberwandung 20 angeformt. Die Versteifungsrippen 84, 86 stehen in gleitendem Eingriff mit der Oberseite der Sperrklinke 70, um die Sperrklinke 70 an einer Verdrehung zu hindern, wenn der Betätigungsknopf 56 gedreht wird.

Ein Zahnriemen 90 ist um die Zahnräder 34, 35 geführt und weist innere Zähne auf, die mit den Zähnen der Zahnräder 34, 35 in Eingriff stehen. Der Zahnriemen 90 hat äußere Zähne, die mit Zähnen des Antriebsrades 66 kämmen. Alternativ kann auch ein kürzerer Riemen als der in Fig. 1 dargestellte verwendet werden, der nur innere Zähne aufweist und bei dem die Zahnräder 34, 35 und das Antriebsrad 66 alle mit der Innenseite des Zahnriemens in Eingriff stehen.

Der einstellbare Armlehnenmechanismus 10 enthält zwei Tragzapfen oder Bolzen 92 und 94, die durch die Lager 42 aufgenommen werden und die an einer Seite des nicht gezeigten Fahrersitzes befestigt sind und von diesem horizontal abstehen. Eine Sackgewindebohrung 96 im äußeren Ende des Bolzens 92, 94 nimmt eine Kopfschraube 98 auf, an welcher eine Stirnseite der Lagerung 42 angreift und die den Bolzen 92, 94 auf der Lagerung 42 festhält. Das andere Ende der Lagerung 42 steht mit einer Schulter 100 des Bolzens 92, 94 in Eingriff. Eine Gewindesackbohrung 102 erstreckt sich in das innere Ende des Bolzens 92, 94. Ein Abstandteil 104 enthält ein zylindrisches Abstandelement 106, von dem beidseits je ein Gewindedorn 108, 110 abstehen. Die beiden Gewindedorne 110 sind in entsprechende nicht näher gezeigte Gewindebohrungen in einem nicht näher gezeigten Seitenrahmenteil des nicht gezeigten Fahrersitzes eingeschraubt. Die Tragzapfen 92, 94 sind auf die Gewindedorne 108 aufgeschraubt, so daß die Tragzapfen 92, 94 bezüglich des Fahrersitzes feststehen.

Eine Verstärkungsstütze 120 wird zwischen den Abstandselementen 106 und den inneren Enden der Tragzapfen 92, 94 gehalten. Die Verstärkungsstütze 120 weist einen im wesentlichen rechteckigen Bereich 122 auf, von dem ein Arm 124 absteht. Eine Kante 125 des rechteckförmigen Bereichs 122 ist umgebogen, um die Steifigkeit der Verstärkungsstütze 120 zu erhöhen. Bohrungen 126 und 128 nehmen die Gewindedorne 108 der Abstandsteile 104 auf. Eine weitere Bohrung 130 ist nahe des Endes des Arms 124 ausgebildet. Eine nicht dargestellte Schraube ist vorzugsweise in die Bohrung 130 eingesteckt und in eine entsprechende nicht dargestellte Gewindebohrung des Fahrersitzes eingeschraubt. Für diesen Zweck kann ein Sicherheitsgurtverankerungsbolzen verwendet werden. Die Bohrungen 126, 128 und 130 sind vorzugsweise in den Eckpunkten eines Dreiecks angeordnet. Die Verankerung bei der Bohrung 130 hindert die Armstütze an einem Verdrehen um eine horizontale Achse.

Die Feder 72 drückt den Betätigungsknopf 56, die Welle 54 und die Sperrklinke 70 in eine Verriegelungslage, in der die Sperrklinke 70 mit den Zahnrädern 34, 35 in Eingriff tritt und diese an einem Verdrehen hindert. Der Betätigungsknopf 56 kann hinsichtlich der Fig. 3 nach rechts verschoben werden, wobei die Sperrklinke 70 in eine Einstellage gebracht wird, in der die Sperrklinke 70 nicht mehr mit den Zahnrädern 34, 35 in Eingriff steht und eine Rotation des Betätigungsknopfes 56, der Hülse 48, des Antriebsrades 66, des Zahnriemens 90 und der Zahnräder 34, 35 zuläßt. Durch eine Verdrehung der Zahnräder 34, 35 werden die Halter 30 und mit ihnen auch der Rahmen 16 relativ zu den Bolzen 92, 94 und damit zu dem nicht gezeigten Fahrersitz bewegt. Der Betätigungsknopf 56 läßt sich im Uhrzeigersinn und gegen den Uhrzeigersinn verdrehen. Infolgedessen bewegt sich der Rahmen 16 in kreisförmiger Weise hoch oder runter, wenn die Halter 30, wie in Fig. 1 gezeigt, hinter den entsprechenden Bolzen 92, 94 liegen, oder wenn die Halter 30 vor den entsprechenden Bolzen 92, 94 liegen. Durch Drehung des Betätigungsknopfes 56 im Uhrzeigersinn oder gegen den Uhrzeigersinn lassen sich zwei unterschiedliche vertikale Lagen für jede Längsposition einstellen.

Alternativen, die unter die vorliegende Erfindung fallen, sind möglich:

Beispielsweise kann das Betätigungsorgan ein Kettenrad aufweisen, die unmittelbar und nicht über einen Zahnriemen mit den Zahnrädern gekoppelt ist. Alternativ kann das Betätigungsorgan als Schneckenantrieb ausgebildet sein, welches mit den Zahnrädern in Verbindung steht und welches sich senkrecht zu der Achse der Zahnräder erstreckt.

## Patentansprüche

1. Einstellbare Armstütze für die Verwendung mit dem Fahrersitz eines Fahrzeugs, insbesondere eines landwirtschaftlichen Fahrzeugs, welche enthält:
- zwei am Fahrersitz befestigbare, von diesem im wesentlichen horizontal abstehende Tragzapfen (92, 94),
- einen Rahmen (16),
- zwei über je eine zentrale Achse drehbar an dem Rahmen (16) befestigte angetriebene Teile (34, 35), dadurch gekennzeichnet, daß diese Teile (34, 35) jeweils eine zu der Achse seitlich versetzte und zu dieser parallel ausgerichtete Bohrung (40) aufweisen, die den entsprechenden Tragzapfen (92, 94) drehbar aufnimmt, und
daß die Armstütze
- ein durch eine Bedienungsperson betätigbares, von dem Rahmen (16) getragenes Stellglied (44) enthält, welches jeweils mit den zwei angetriebenen Teilen (34, 35) antriebsmäßig verbunden ist, um diese (34, 35) gegenüber dem Rahmen (16) zu verdrehen, wobei das angetriebene Teil (34, 35) mit dem entsprechenden Tragzapfen (92, 94) kooperiert, um eine Bewegung des angetriebenen Teils (34, 35) und des Rahmens (16) relativ zum ortsfesten Tragzapfen (92, 94) zu bewirken.

2. Armstütze nach Anspruch 1, dadurch gekennzeichnet, daß das Stellglied (44) enthält:
- eine Hülse (48), die von einer Bohrung des Rahmens (16) drehbar und in ihrer Längsrichtung verschiebbar aufgenommen wird,
- einen Betätigungsknopf (56), der mit einem ersten Ende der Hülse (48) längsverschiebbar und drehfest verbundenen ist,
- ein Antriebselement (66), welches mit dem zweiten Ende der Hülse (48) drehfest verbunden ist und in Antriebsverbindung mit dem wenigstens einen angetriebenen Teil (34, 35) steht,
- eine Welle (54), die von der Hülse (48) längsverschiebbar aufgenommenen wird und deren erstes Ende mit dem Bedienungsknopf (56) verbunden ist, und
- eine Sperrklinke (70), die mit dem zweiten Ende der Welle (54) verbunden ist, derart, daß sich das Stellglied (44) aus einer Verriegelungslage, in der die Sperrklinke (70) mit dem angetriebenen Teil (34, 35) in Eingriff steht und dieses an einem Verdrehen hindert, sich in eine Verstellage bewegen läßt, in der die Sperrklinke (70) das angetriebene Teil (34, 35) freigibt, so daß eine Verdrehung des Bedienungsknopfes (56), der Hülse (48), des Antriebselements (66) und des angetriebenen Teils (34, 35) möglich ist.

3. Armstütze nach Anspruch 1 oder 2, dadurch gekennzeichnet, daß das wenigstens eine angetriebene Teil (34, 35) auf einer äußeren im wesentlichen zylindrischen Peripherie radial nach außen weisende Verzahnung aufweist, daß ein Antriebselement des Stellglieds (44) ein Kettenrad (66) enthält und daß ein Zahnriemen (90) vorgesehen ist, der das Kettenrad (66) mit der Verzahnung des angetriebenen Teils (34, 35) antriebsmäßig verbindet.

4. Armstütze nach einem der Ansprüche 2 oder 3, dadurch gekennzeichnet, daß der Bedienungsknopf (56) axial verschiebbar ist, um die Sperrklinke (70) axial in den und aus dem Eingriff mit Verzahnungen des angetriebenen Teils (34, 35) zu bewegen.

5. Armstütze nach einem der Ansprüche 2 bis 4, dadurch gekennzeichnet, daß auf der Welle (54) zwischen dem Bedienungsknopf (56) und einem Ende der Hülse (48) eine Feder (72) angeordnet ist, die den Bedienungsknopf (56), die Welle (54) und die Sperrklinke (70) in die Verriegelungslage drückt.

6. Armstütze nach einem der Ansprüche 1 bis 5, dadurch gekennzeichnet, daß der Rahmen (16) zu seiner dem Bedienungsknopf (56) gegenüberliegenden Seite hin offen ist.

7. Armstütze nach einem der Ansprüche 1 bis 6, dadurch gekennzeichnet, daß von dem Rahmen (16) wenigstens eine Verstärkungsrippe (84, 86) absteht, die mit der Sperrklinke in gleitendem Eingriff steht und diese an einem Verdrehen hindert.

8. Armstütze nach einem der Ansprüche 1 bis 7, dadurch gekennzeichnet, daß der Rahmen (16) zwei zueinander beabstandete Bohrungen aufweist, die jeweils eine Stütze (30) aufnehmen, auf der jeweils ein mit einem Zahnkranz versehenes angetriebenes Teil (34, 35) drehbar gelagert ist.

## Claims

1. An adjustable arm rest for use with the driver's seat of a vehicle, especially an agricultural vehicle, which comprises:
- two support pins (92, 94) which can be fixed to the driver's seat, extending substantially horizontally therefrom,
- a frame (16),
- two driven parts (34, 35) rotatably fixed to the frame (16) about respective central axes,
- characterized in that these parts (34, 35) each have a bore (40) which is offset laterally from the axis and parallel thereto and which receives the corresponding support pin (92, 94), and
- in that the arm rest includes an actuator (44) which is operable by an operator, is carried by the frame (16) and is drivably coupled to each of the two driven parts (34, 35), in order to turn these (34, 35) relative to the frame, wherein the driven part (34, 35) cooperates with the corresponding support pin (92, 94) in order to effect movement of the driven part (34, 35) and of the frame (16) relative to the positionally fixed support pins (92, 94).

2. An arm rest according to claim 1, characterized in that the actuator (44) comprises:
- a sleeve (48) which is rotatably received by a bore in the frame (16) and can slide in its longitudinal direction therein,
- an actuating knob (56) which is connected rotationally fast with but longitudinal slidably on a first end of the sleeve (48),
- a drive element (66) which is connected rotationally fast with the second end of the sleeve (48) and is drivably coupled to the at least one driven part (34, 35),
- a shaft (54) which is longitudinally slidably received by the sleeve (48) and whose first end is connected to the actuating knob (56), and
- a detent member (70) which is connected to the second end of the shaft (54), in such a manner that the actuator (44) can be moved out of a locking position, in which the detent member (70) is engaged with the driven part (34, 35) and prevents this from rotating, into an adjusting position, in which the detent member (34) releases the driven part (34, 35), so that rotation of the actuating knob (56), the sleeve (48), the drive element (66) and the driven part (34, 35) is possible.

3. An arm rest according to claim 1 or 2, characterized in that the at least one driven part (34, 35) has teeth facing outwardly on an external, substantially cylindrical periphery, in that a drive element of the actuator (44) includes a sprocket (66) and in that a toothed belt (90) is provided to connect the sprocket (66) drivably with the teeth of the driven part (34, 35).

4. An arm rest according to claim 2 or 3, characterized in that the actuating knob (56) is axially slidable, in order to move the detent member (70) axially into and out of engagement with the teeth of the driven part (34, 35).

5. An arm rest according to any of claims 2 to 4, characterized in that a spring (72) is arranged on the shaft (54) between the actuating knob (56) and one end of the sleeve (48) and biases the actuating knob (56), the shaft (54) and the detent member (70) into the locking position.

6. An arm rest according to any of claims 1 to 5, characterized in that the frame (16) is open to its side opposite the actuating knob (56).

7. An arm rest according to any of claims 1 to 6, characterized in that at least one reinforcing rib (84, 86) projects from the frame (16) and is in sliding engagement with the detent member and prevents this from turning.

8. An arm rest according to any of claims 1 to 7, characterized in that the frame (16) has two bores spaced from one another, each of which receives a support (30) on each of which a driven part (34, 35) provided with a ring gear is rotatably mounted.

## Revendications

1. Accoudoir réglable destiné à être utilisé avec le siège du conducteur d'un véhicule, notamment d'un véhicule agricole, qui contient :
- deux embouts de support (92, 94) qui peuvent être fixés sur le siège du conducteur et font saillie essentiellement horizontalement à partir de ce siège,
- un cadre (16),
- deux parties entraînées (34, 35), qui sont fixées respectivement à un axe central de manière à pouvoir tourner sur le cadre,
caractérisé en ce que
ces parties (34, 35) possèdent chacune un perçage (40) décalé latéralement par rapport à l'axe et orienté parallèlement à ce dernier et qui loge l'embout de support (92, 94) de manière qu'il puisse tourner, et
que l'accoudoir
- contient un organe de réglage (44), qui peut être actionné par un opérateur et porté par le cadre (16) et qui est relié respectivement selon une liaison motrice, aux deux parties entraînées (34, 35) de manière à faire tourner ces dernières (34, 35) par rapport au cadre (16), la partie entraînée (34, 35) coopérant avec l'embout de support correspondant (92, 94) pour déclencher un déplacement de la partie entraînée (34, 35) du cadre (16) par rapport à l'embout de support fixe (92, 94).

2. Accoudoir selon la revendication 1, caractérisé en ce que l'organe de réglage (44) contient :
- une douille (48), qui est logée dans un perçage du cadre (16) de manière à pouvoir tourner et à être déplaçable dans sa direction longitudinale,
- un bouton d'actionnement (56), qui est relié à une première extrémité de la douille (48) de manière à être déplaçable longitudinalement et bloqué en rotation,
- un élément d'entraînement (66), qui est relié solidairement en rotation à la seconde extrémité de la douille (48), et est relié selon une liaison motrice à la au moins une partie entraînée (34, 35),
- un arbre (54), qui est logé dans la douille (48) de manière à être déplaçable longitudinalement et dont la première extrémité est reliée au bouton d'actionnement (56), et
- un cliquet de blocage (70), qui est relié à la seconde extrémité de l'arbre (54) de telle sorte que l'organe de réglage (44) peut se déplacer depuis une position de verrouillage dans laquelle le cliquet de blocage (70) engrène avec la partie entraînée (34,35) et dans laquelle cette partie empêche une rotation, pour venir dans une position de réglage, dans laquelle le cliquet de blocage (70) libère la partie entraînée (34, 35) de sorte qu'une rotation du bouton d'actionnement (56), de la douille (48), de l'élément d'entraînement (66) et de la partie entraînée (34, 35) est possible.

3. Accoudoir selon la revendication 1 ou 2, caractérisé en ce que ladite au moins une partie entraînée (34, 35) possède, sur une périphérie extérieure essentiellement cylindrique, une denture qui s'étend radialement vers l'extérieur, qu'un élément d'entraînement de l'organe de réglage (44) contient une roue à chaîne (66) et qu'il est prévu une courroie dentée (90) qui relie selon une liaison motrice la roue à chaîne (66) à la denture de la partie entraînée (34, 35).

4. Accoudoir selon l'une des revendications 2 ou 3, caractérisé en ce que le bouton de commande (56) est déplaçable axialement de manière à déplacer le cliquet de blocage (70) axialement pour son engrènement avec des dentures de la partie entraînée (34, 35) et son dégagement de ces dentures.

5. Accoudoir selon l'une des revendications 2 à 4, caractérisé en ce que sur l'arbre (54) est disposé, entre la tête d'actionnement (56) et une extrémité de la douille (48), un ressort (72), qui repousse le bouton d'actionnement (56), l'arbre (54) et le cliquet de blocage (70), dans la position de verrouillage.

6. Accoudoir selon l'une des revendications 1 à 5, caractérisé en ce que le cadre (16) est ouvert en direction de son côté situé à l'opposé du bouton d'actionnement (56).

7. Accoudoir selon l'une des revendications 1 à 6, caractérisé en ce qu'à partir du cadre (16) fait saillie au moins une nervure de renforcement (84, 86), qui engrène selon un engagement coulissant avec le cliquet de blocage et empêche une rotation de ce dernier.

8. Accoudoir selon l'une des revendications 1 à 7, caractérisé en ce que le cadre (16) possède deux perçages distants l'un de l'autre, qui reçoivent chacun un support (30), sur lequel respectivement une partie entraînée (34, 35), pourvue d'un couronne dentée, est montée de manière à pouvoir tourner.
